# EUROPEAN PATENT SPECIFICATION

(11) **EP 3 746 364 B1**
(45) Date of publication and mention of the grant of the patent: **20.08.2025**
(21) Application number: 19704425.8
(22) Date of filing: 01.02.2019
(51) Int. Cl.: B64C 29/00, B64C 39/10

(54) **VTOL AIRCRAFT**
FLUGZEUG MIT SENKRECHTSTART UND -LANDUNG
AÉRONEF À DÉCOLLAGE ET ATTERRISSAGE VERTICAUX

(30) Priority: 02.02.2018 GB 201801766
(43) Date of publication of application: 09.12.2020
(73) Proprietor: SAMAD AEROSPACE LIMITED, Wharley End, Bedfordshire MK43 0FQ (GB)
(72) Inventor: MOHSENI, Seyed Mohammad, Milton Keynes Buckinghamshire MK11 4BF (GB)
(74) Representative: Murgitroyd & Company
(86) International application number: PCT/GB2019/050282
(87) International publication number: WO 2019/150128

(56) References cited:
- WO-A1-2015/019255
- WO-A1-2017/155348
- WO-A2-2006/113877
- CN-A- 106 586 001
- CN-A- 107 600 405
- CN-A- 107 628 244
- ES-A1- 2 293 818
- US-A1- 2009 008 510
- US-A1- 2014 103 158

## Description

The present invention relates to a vertical take-off and landing VTOL aircraft, e.g. an aeroplane capable of vertical take-off and landing and also capable of horizontal flight.

### BACKGROUND

VTOL aircraft offer the prospect of eliminating the need for a runway that is otherwise required by those aircraft only capable of achieving high speed horizontal flight. Due to the restriction of requiring a runway, helicopters are often chosen for short range flights as they can be landed on a relatively small, flat surface; such as the roof of a building. However, due to the aerodynamic limitations of the lift generated by a helicopter rotor, they cannot travel as quickly as a fixed wing aircraft.

High speed jet travel for mass consumption is common and, furthermore, business jets typically bought by wealthy individuals or corporations are also available. Jet aeroplanes facilitate fast travel between airports and they are often favoured over helicopters due to the increased comfort provided to the passenger. VTOL aircraft can potentially offer the advantages and comfort of a private jet with the ease of vertical take-off and landing of a helicopter.

It is particularly noteworthy that the technology in the business jet industry has matured without any major innovation for many decades. Although many efforts have been made for enhancing the comfort in the cabin and increasing range and other specifications, these aircraft still need airports/runways to take-off and land, requiring the time-consuming practice of airport security plus the taxes and expenses of airports.

Furthermore, the high cost of these vehicles has limited their market to large corporations, and very wealthy individuals. In addition, no major environmental achievements have been demonstrated in this industry. Some businesses and organisations have taken the route of using helicopters because of their flexibility at take-off and landing, but helicopters fall short on measures of range, speed and comfort.

By way of background, VTOL aircraft are well known and now particularly popular, e.g. in the form of radio-controlled drones. An example of a vertical take-off and landing aircraft is disclosed in US2007/0246601 A1. In this document the vehicle incorporates multiple vertical facing ducted fans for vertical motion and means for achieving conventional horizontal flight.

WO2017155348 relates to a VTOL aircraft including a control unit, a pair of rotors disposed in the wing and a rotatable variable thrust unit. CN107600405 relates to a VTOL aircraft including a single mid-body rotor (on a centre line of the body) and two rotatable thrust units. US2009008510 relates to a VTOL aircraft with closable round wing hatches with internal rotors held by a wing. ES2293818 relates to a VTOL aircraft with propeller engines and rotary sustainers.

Another example of VTOL aircraft is provided by US10040547 B wherein an unmanned aircraft is provided with front and rear vertical and horizontal air discharge pathways to facilitate vertical lift and horizontal flight. US 2014/103158 discloses another VTOL aircraft.

### SUMMARY OF THE INVENTION

A need has been identified for a small passenger aircraft, particularly for business use, that incorporates VTOL features. The prior art comprises VTOL aircraft, e.g. with three fans, providing vertical lift but this does not allow for a failsafe were one of the fans to fail. The prior art also features aircraft with many fans, in order to provide for vertical and horizontal motion by way of the separate fans. The present invention seeks to address the need for economy of design and greater consideration of occupant safety.

According to a first aspect of the present invention, an aircraft is provided according to claim 1. Particularly, the aircraft includes a blended-wing-body (BWB) having fixed wings extending from a main body. An advantage of a BWB configuration is high aerodynamic quality and, consequently, less energy consumption for flight. The main body further has a forward cockpit/cabin section and a tail section. There are two fixed fans positioned within and through the blended-wing-body and two further fans that are rotatable between vertical and horizontal facing orientations. BWB provides sufficient depth in the wing for fans which is a significant ergonomic benefit.

Both sets of fans are preferably electrically powered and disposed either side of a centre line, the rotatable fans being further disposed towards the rear of the main body, for providing a transition between vertical and horizontal flight. The two fixed fans and the two rotatable fans, being four fans in total, are distributed about the centre of gravity of the aircraft and powered such that at least three of the fans in operation enable the aircraft to land safely. The centre of gravity of the aircraft lies between the front and rear fans but is likely closer to the front fans to ensure cruise stability. Advantageously, the present invention effectively provides a failsafe operation where any three vertical fans, during vertical motion, provide sufficient combined lift, should one of the four vertical fans fail. This advantage is provided by the distribution of the fans around the aircraft's centre of gravity and appropriate powering thereof. The configuration intends that, were one fan to fail, the aircraft would still have three remaining points to provide lift about the centre of gravity. At the least such a configuration will enable safe descent in the event of one fan failure. If sufficient power is available then three fans may still enable upwards motion. Generally, in order to operate safely, the thrust of the four fans must be at least twice as much as the weight of the aircraft. This is required, in the event of a fan failure, to maintain balance.

An advantage associated with the rotatable fans providing vertical and horizontal thrust alternately is the smooth transition from vertical to horizontal flight by rotation of the rotatable fans.

In an embodiment one or more of the fans have a covered and uncovered mode, by way of a cover or shield element extending over an opening within which the fan is set. Particularly the fixed fans, being positioned within the blended-wing-body, i.e. through the wing and/or main body, include such moveable covers. Alternatively, the fans may be configured with blades of a movable pitch that can move from an operational pitch configuration to a configuration serving as a closure for the fan opening through the body. An advantage of covering, partially or completely, the fixed fans' exhausts and/or intakes is that the aerodynamic characteristics will not change and therefore the speed of the aircraft are not sacrificed by the presence of fixed fans.

A turbine engine is provided adjacent the rear/tail of the body of the aircraft. An advantage of the turbine engine is that high horizontal cruise speeds can be reached.

In some embodiments the turbine engine is an electric/gas turbine hybrid propulsion system. Hybrid systems are advantageous in that they produce less harmful emissions than gas engines while providing higher power and speed than electric engines thereby providing greater range than an aircraft that is only electric powered. As noted herein, the exemplary form of the VTOL fans are electrically powered, but alternative/equivalent energy systems may be possible, either known in the art or to be developed in the future.

In some embodiments the aircraft comprises a turbo-generator and a battery or set of batteries, wherein the turbo-generator is configured to charge the electric batteries while simultaneously providing power to the turbine engine during flight. The skin of the aircraft may be further modified with a solar cell or comparative energy capture device.

In some embodiments the aircraft includes a control system which, among other functions, is capable of automatically varying the thrust created by each electric fan. Selective/automatic variation of thrust provides the advantage of levelling the aircraft during vertical motion, especially in the case of a wind updraft or other weather phenomena.

The aircraft body and wings are made from a rigid, lightweight structure.

In some embodiments the aircraft interior cabin is designed for the purpose of comfortable human transportation. Particularly, the interior design of the aircraft cabin determines its potential use. A comfortable interior can greatly increase the commercial value whereby a potential buyer looking for a private or business aircraft will be more likely to invest more money in a comfortable aircraft.

### BRIEF DESCRIPTION OF THE DRAWINGS

Fig. 1 is a perspective view of an aircraft according to an embodiment of the invention.
Fig. 2 is a top plan view of an aircraft according to an embodiment of the invention.
Fig. 3 is a front elevation view of an aircraft according to an embodiment of the invention.
Fig. 4 is a side elevation view of an aircraft according to an embodiment of the invention.
Fig. 5 is a rear elevation view of an aircraft according to an embodiment of the invention.

### DETAILED DESCRIPTION OF THE EMBODIMENTS

The following description presents embodiments of the present invention and, together with the drawings, serves to explain principles of the present invention. However, the scope of the invention is not intended to be limited to the precise details of the embodiments, with variations apparent to a skilled person deemed also to be covered by the description of this invention. Terms for components used herein should be given a broad interpretation that also encompasses equivalent functions and features. Descriptive terms should also be given the broadest possible interpretation; e.g. the term "comprising" as used in this specification means "consisting at least in part of" such that interpreting each statement in this specification that includes the term "comprising", features other than that or those prefaced by the term may also be present. Related terms such as "comprise" and "comprises" are to be interpreted in the same manner. Directional terms such as "vertical", "horizontal", "up", "down", "upper" and "lower" are used for convenience of explanation usually with reference to the illustrations and are not intended to be ultimately limiting if an equivalent function can be achieved with an alternative dimension and/or direction.

The present description refers to embodiments with particular combinations of features, however, it is envisaged that further combinations and cross-combinations of compatible features between embodiments will be possible. Indeed, isolated features may function independently from other features and not necessarily be implemented as a complete combination.

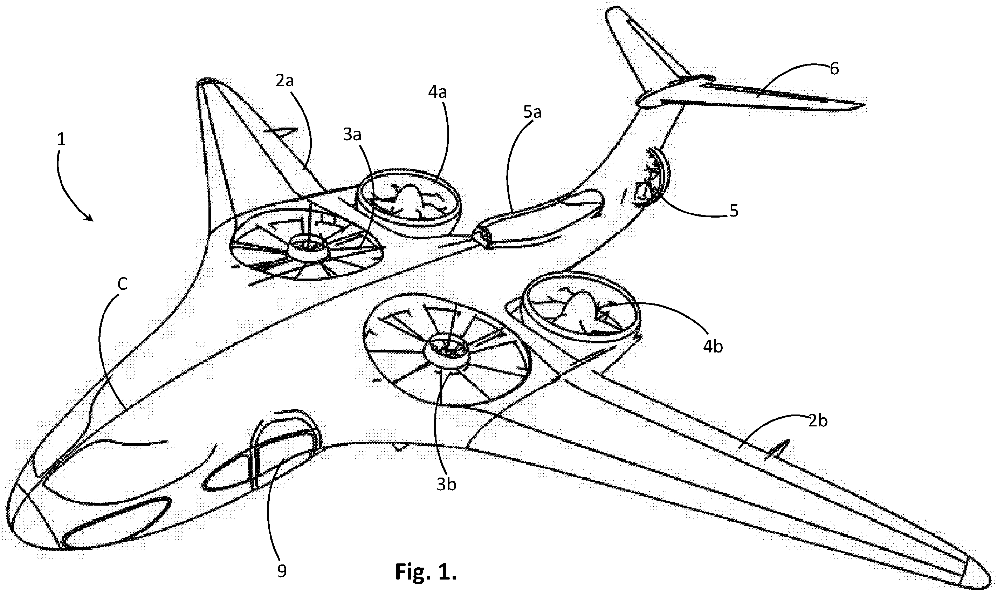

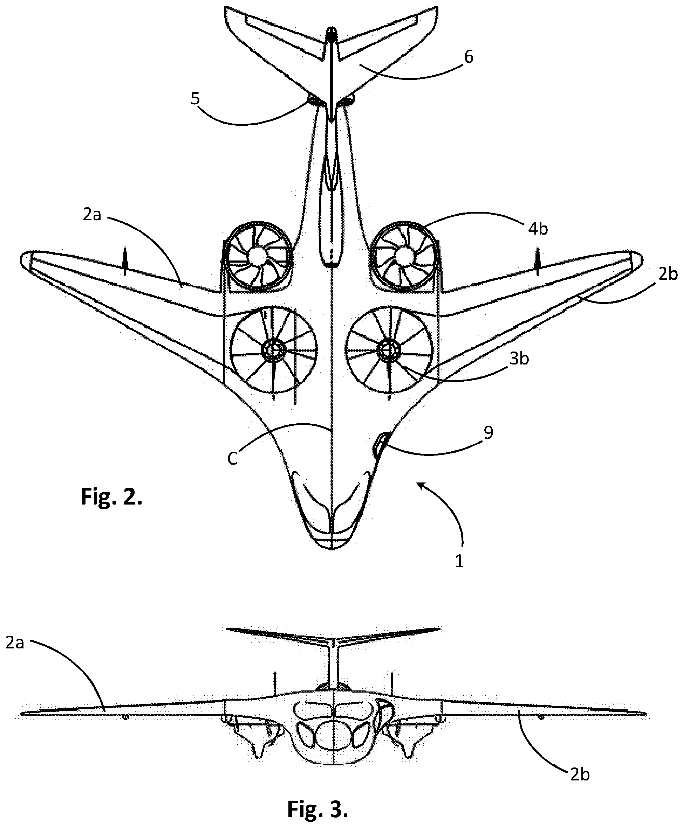

The aircraft shown in Figures 1 to 5 is one embodiment of the present invention. This aircraft comprises a body 1 with a centre line C and wings 2a and 2b extending outwardly therefrom. At the rear of the body 1 is a tail section 6. It will be apparent that the wings 2a and 2b, together with the body 1, are of a blended-wing-body design as is known in the art.

On the upper surface of the body 1 two fixed electric fans 3a and 3b are set into openings extending through the wing and/or body portion, symmetrically either side of centre line C. The upside portion of the openings for fixed fans 3a/3b (as visible) serve as an intake to pull air through the fan and develop thrust through the body in a downward direction toward an underside of the openings. A component of vertical lift is thus provided by the fixed fans 3a/3b.

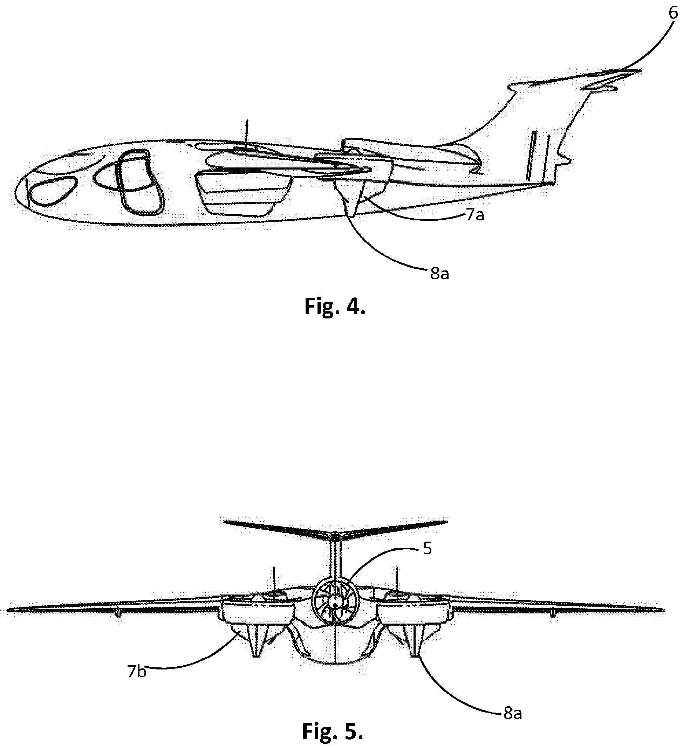

At a position to the rear of the wings 2a and 2b, adjacent the body 1 at the tail end, are two rotatable electric fans 4a and 4b. The rotatable electric fans 4a and 4b are mounted on a pivot axle to be rotatable through at least 90° and up to 180°, thereby enabling movement from a vertical thrust position as shown in Figures 1 to 5 to a horizontal thrust position (not shown) where the fan housings 4a and 4b are disposed approximately vertically. As best seen in Figures 4 and 5, radial fins 7a, 7b serve as a mounting bracket for the fan's axle/motor housing 8a/8b.

The fixed fans may be of larger diameter than the rotatable fans, as shown, although other configurations are possible if necessary for an alternative optimum solution.

A particular aspect of the invention is that the aircraft is a "convertiplane" which means that it converts from one mode of flight to another. Helicopters, quadcopters and conventional aircraft all rely on just one form of lift/propulsion, whereas a convertiplane has two: lift force(s) overcome the aircraft weight and this comes from powered rotors in the hover and aerodynamic lift off the wing in "conventional" flight. This means that the aircraft has to "convert" from one mode to the other as it transitions from hover to conventional flight and back again.

The four lift fans provide the hover lift capability when air speeds are too low for the wing to function properly (i.e. according to the aerofoil effect that provides lift). The wing becomes progressively more effective as forward speed is gained. Preferably, forward acceleration is provided by a fifth fan 5 in the tail of the aircraft, accelerating it to a point where wing lift is sufficient to carry the weight of the aircraft and payload. Once a sufficient speed has been reached, the fans on the trailing edge of the wing (4a and 4b) will rotate to provide further forwards thrust. The process is reversed for landing.

In an embodiment a turbine engine can be provided within or adjacent the tail section 6, e.g. in communication with an air inlet 5a located on the centre line C. The turbine engine may be powered by gas/aviation fuel or it may be a multi-mode electric/gas turbine hybrid capable of operating with either electric or gas energy supply. Such an engine has three modes: full electric mode for low speed forward flight, high speed gas-powered mode, and a mode of using gas power to simultaneously power the turbine engine and charge an electric battery or set of batteries which in turn powers the electric fans 2a, 2b, 3a and 3b. The engine/generator may power the fifth fan 5 as illustrated or a jet engine may provide thrust from an exhaust (not illustrated).

In the illustrated embodiment the dorsal intake 5a feeds the turbo-generator for powering all five engines, e.g. the intake for the fifth engine is the intake for the aft fan. A tail mounted jet engine is an alternative to the aft (No. 5) fan which would then not require electricity.

According to the invention, the four electric fans 3a, 3b, 4a, 4b are positioned in a distribution about the centre of gravity of the aircraft. The distribution of the electric fans may be square, rectangular or isosceles trapezoidal. During vertical motion of the aircraft, such as take-off or landing from a location without a runway, the four electric fans 3a, 3b, 4a and 4b cooperate to provide vertical thrust that can lift the aircraft or slow its descent.

The aircraft preferably includes a control system that can assist and/or automate some or all inflight functions. For example, the thrust of each of the electric fans may be selectively varied. A computer that is operable, e.g. by a pilot, may be located within the cabin to provide a method of selectively varying the thrust of each of the electric fans. Control over the thrust of the individual fans provides greater stability to the aircraft by enabling control over yaw, pitch and roll.

When sufficient vertical motion has been achieved, i.e. following take-off, the two rotatable electric fans 4a, 4b rotate about their respective mounting axes to a horizontal thrust position and the two fixed electric fans 3a, 3b can be optionally shut down and/or covered over by slideable covers (not shown) covering their exhausts and/or intakes. The covers may be retractable or collapsible within or against the shell of the body 1. The covers may provide improved aerodynamics whilst the aircraft is in high speed horizontal flight.

The centre fan 5 provides for the main high speed horizontal motion component and may be used in combination with the rotatable electric fans to provide greater speed in the horizontal direction. It also serves as a range extender.

During deceleration and landing of the aircraft, the fixed electric fans 3a and 3b are engaged and the rotatable electric fans 4a and 4b are rotated into the vertical thrust position as illustrated. Making use of the selective thrust control of the four electric fans, the aircraft can be kept level, while it makes its vertical descent.

The body 1 and wings 2a and 2b should be made from any sufficiently rigid and lightweight materials and construction techniques. Furthermore, a suitable landing gear can be incorporated according to requirements, e.g. wheels or skids. Access to the cabin can be provided by a conventional aircraft door 9.

By way of further explanation, blended-wing-body (BWB) aircraft design is a known configuration but, according to the present invention, two embedded fans are provided that develop the main vertical thrust requirement for VTOL flight. The two forward (mid-body) fans will gradually shut down in a transition mode when the aircraft is moving to forward flight and the intakes and exhausts can be optionally covered fully at cruise mode. Alternatively, aerodynamic contours may allow smooth airflow over the fan openings such that physical covers are not necessary.

As noted above, the two motors at the rear of the aircraft have thrust vectoring downward during the VTOL operation and then the thrust vectors re-orient to a horizontal positon to push the thrust backward allowing the aircraft to move forward.

According to the state of the art, long haul electric air travel is not presently possible. This problem is addressed in the present context by use of a hybrid gas turbine positioned at the tail of the aircraft. In one form the turbine may consist of a fan linked via a shaft to an alternator. The alternator can be linked to a gas turbine compressor section via a clutch and the compressor section is linked to the turbine section via another clutch on their respective shafts. This hybrid electric gas turbine can work on the following modes based on the requirements of the invention. Particularly:
- Full electric operation for low speed forward flight. In this mode just the alternator is linked to the fan and the clutch that links the alternator to the compressor section is decoupled, allowing the low speed full electric operation to happen.
- Once the aircraft needs to move to a high speed electric mode the alternator will be coupled to the compressor section via clutch (that is decoupled already from the turbine section) to provide high speed pressurised air which then will be converted to dynamic pressure at the exhaust of the gas turbine to achieve high speed.
- At long ranges the batteries might need charging as they are the source of power for the fans. At this mode, the gas turbine is fully coupled to the alternator linking the whole shaft together via both clutches. Then the gas turbine is turned on and the alternator works as a generator to charge the batteries. At this mode the hybrid gas turbine provides both charging for the other fans and thrust for the aircraft.

## Claims

1. An aircraft comprising:
a blended-wing-body (1) having a main body comprising with a forward cockpit section, a mid-body section and a rearward tail section (6), and fixed wings (2a,2b) adjoined to the mid-body section;
two fixed fans (3a, 3b) set within and through the mid-body section of the main body, either side of a centre line thereof, and configured to generate vertical lift;
two rotatable fans (4a, 4b) disposed either side of the centre line (C) and towards the rear of the main body that are rotatable between vertical and horizontal facing orientations, for providing a transition between vertical and horizontal flight;
wherein the two fixed fans (3a, 3b) and the two rotatable fans (4a,4b), being four fans in total, are distributed about a centre of gravity of the aircraft, and
wherein a turbine engine and/or fifth fan (5) is located adjacent or within the tail section (6).

2. The aircraft according to claim 1, wherein the turbine engine (5) is a multi-mode electric/gas turbine hybrid propulsion system.

3. The aircraft according to claim 1 or 2, including an electric battery or set of batteries wherein the turbine engine (5) is configured to charge the electric battery while simultaneously providing forward thrust during flight.

4. The aircraft according to any of the preceding claims, including a controller configured to automatically vary the lift/thrust created by each fan.

5. The aircraft according to claim 4, wherein the controller is configured to gradually reduce power to the fixed fans (3a, 3b) in a transition mode when, in use, the aircraft is moving forward.

6. The aircraft according to any of the preceding claims, wherein a cover is provided for removably covering one or both of the fixed fans (3a, 3b) when not operating or shutting down.

7. The aircraft according to any preceding claim, wherein the body and wings (2a, 2b) are made from a rigid, lightweight material and/or construction.

8. The aircraft according to any preceding claim, wherein the cockpit communicates with an interior cabin for accommodating passengers.

9. The aircraft according to any preceding claim, wherein the two fixed fans (3a, 3b) and/or rotatable fans (4a, 4b) are electrically powered.

## Patentansprüche

1. Ein Flugzeug, beinhaltend:
einen Blended-Wing-Body (1), der einen Hauptkörper, der einen vorderen Cockpit-Abschnitt, einen Mittelkörperabschnitt und einen rückwärtigen Leitwerkabschnitt (6) beinhaltet, und feste Flügel (2a, 2b), die an den Mittelkörperabschnitt angrenzen, aufweist;
zwei feststehende Fans (3a, 3b), die innerhalb und durch den Mittelkörperabschnitt des Hauptkörpers an beiden Seiten einer Mittellinie davon gesteckt sind und dazu konfiguriert sind, einen senkrechten Auftrieb zu erzeugen;
zwei drehbare Fans (4a, 4b), die an beiden Seiten der Mittellinie (C) und zum Heck des Hauptkörpers hin angeordnet sind und die zwischen einer senkrechten und einer waagerechten Ausrichtung drehbar sind, zum Bereitstellen eines Übergangs zwischen senkrechtem und waagerechtem Flug;
wobei die zwei feststehenden Fans (3a, 3b) und die zwei drehbaren Fans (4a, 4b), die insgesamt vier Fans sind, um einen Schwerpunkt des Flugzeugs verteilt sind und
wobei sich ein Turbinentriebwerk und/oder fünfter Fan (5) neben oder innerhalb des Leitwerkabschnitts (6) befindet.

2. Flugzeug gemäß Anspruch 1, wobei das Turbinentriebwerk (5) ein Elektro- /Gasturbinen-Hybrid-Antriebssystem mit mehreren Betriebsarten ist.

3. Flugzeug gemäß Anspruch 1 oder 2, umfassend eine Elektrobatterie oder einen Satz Batterien wobei das Turbinentriebwerk (5) dazu konfiguriert ist, die Elektrobatterie aufzuladen, während es gleichzeitig Vorwärtsschub während des Fluges bereitstellt.

4. Flugzeug gemäß einem der vorhergehenden Ansprüche, umfassend ein Steuergerät, das dazu konfiguriert ist, automatisch den Auftrieb/Schub zu variieren, der von jedem Fan erzeugt wird.

5. Flugzeug gemäß Anspruch 4, wobei das Steuergerät dazu konfiguriert ist, allmählich die Leistung zu den feststehenden Fans (3a, 3b) in einem Übergangsmodus zu reduzieren, wenn sich das Flugzeug im Gebrauch vorwärts bewegt.

6. Flugzeug gemäß einem der vorhergehenden Ansprüche, wobei eine Abdeckung bereitgestellt ist, um einem oder beide der feststehenden Fans (3a, 3b) abzudecken, wenn diese nicht in Betrieb oder abgeschaltet sind.

7. Flugzeug gemäß einem vorhergehenden Anspruch, wobei der Körper und die Flügel (2a, 2b) aus einem/r starren Leichtbaumaterial/-konstruktion hergestellt sind.

8. Flugzeug gemäß einem vorhergehenden Anspruch, wobei das Cockpit mit einer Innenkabine zum Aufnehmen von Passagieren in Verbindung steht.

9. Flugzeug gemäß einem vorhergehenden Anspruch, wobei die zwei feststehenden Fans (3a, 3b) und/oder drehbaren Fans (4a, 4b) elektrisch angetrieben werden.

## Revendications

1. Un aéronef comprenant :
un corps à ailes raccordées au fuselage (1) ayant un corps principal composé d'une section de cockpit avant, d'une section de fuselage centrale et d'une section de queue arrière (6), et d'ailes fixes (2a, 2b) qui sont contigües à la section de fuselage centrale ; deux soufflantes fixes (3a, 3b) installées au sein de et à travers la section de fuselage centrale du corps principal, de part et d'autre d'une ligne axiale de celui-ci, et configurées pour générer une sustentation verticale ;
deux soufflantes rotatives (4a, 4b) disposées de part et d'autre de la ligne axiale (C) et vers l'arrière du corps principal qui peuvent être tournées entre des orientations à la verticale et à l'horizontale, destinées à assurer une transition entre un vol vertical et un vol horizontal ;
dans lequel les deux soufflantes fixes (3a, 3b) et les deux soufflantes rotatives (4a, 4b), soit quatre soufflantes au total, sont réparties autour d'un centre de gravité de l'aéronef, et
dans lequel un moteur à turbine et/ou une cinquième soufflante (5) sont situés adjacents à ou au sein de la section de queue (6).

2. L'aéronef selon la revendication 1, dans lequel le moteur à turbine (5) est un système de propulsion hybride à turbine à gaz/électrique multimodal.

3. L'aéronef selon la revendication 1 ou la revendication 2, incluant une batterie électrique ou un ensemble de batteries dans lequel le moteur à turbine (5) est configuré pour charger la batterie électrique tout en assurant simultanément une poussée vers l'avant durant le vol.

4. L'aéronef selon n'importe lesquelles des revendications précédentes, incluant un dispositif de commande configuré pour faire varier automatiquement la sustentation/la poussée créées par chaque soufflante.

5. L'aéronef selon la revendication 4, dans lequel le dispositif de commande est configuré pour réduire progressivement la puissance alimentée aux soufflantes fixes (3a, 3b) dans un mode de transition lorsque, lors de l'utilisation, l'aéronef est en train de se déplacer vers l'avant.

6. L'aéronef selon n'importe lesquelles des revendications précédentes, dans lequel un capot est prévu pour recouvrir de façon amovible une soufflante fixe (3a, 3b), ou les deux, lorsqu'elle(s) ne fonctionne(nt) pas ou s'arrête(nt).

7. L'aéronef selon n'importe quelle revendication précédente, dans lequel le corps et les ailes (2a, 2b) sont réalisés en une matière et/ou selon une construction rigides légères.

8. L'aéronef selon n'importe quelle revendication précédente, dans lequel le cockpit communique avec une cabine intérieure destinées à accueillir des passagers.

9. L'aéronef selon n'importe quelle revendication précédente, dans lequel les deux soufflantes fixes (3a, 3b) et/ou soufflantes rotatives (4a, 4b) sont alimentées électriquement.
